# EUROPÄISCHE PATENTSCHRIFT

(11) **EP 3 658 398 B1**
(45) Veröffentlichungstag und Bekanntmachung des Hinweises auf die Patenterteilung: **13.10.2021**
(21) Anmeldenummer: 19769098.5
(22) Anmeldetag: 10.09.2019
(51) Int. Cl.: B60K 1/04, B62D 21/02, B62D 25/20, B62D 21/15

(54) **CHASSIS FÜR EIN STRASSENFAHRZEUG MIT ELEKTRISCHEM ENERGIESPEICHER**
CHASSIS FOR A ROAD VEHICLE WITH AN ELECTRICAL ENERGY STORE
CHÂSSIS DESTINÉ À UN VÉHICULE ROUTIER COMPRENANT UN ACCUMULATEUR D'ÉNERGIE ÉLECTRIQUE

(30) Priorität: 18.09.2018 DE 102018122854
(43) Veröffentlichungstag der Anmeldung: 03.06.2020
(73) Patentinhaber: HÖRMANN AUTOMOTIVE GMBH, 85614 Kirchseeon (DE); HÖRMANN VEHICLE ENGINEERING GMBH, 09112 Chemnitz (DE)
(72) Erfinder: HANNEFORT, Thilo, 01326 Dresden (DE); HERMSDORF, Matthias, 09306 Wechselburg (DE); HUSE, Philipp, 60314 Frankfurt (DE); SCHMITT, Wolfram, 55283 Nierstein (DE)
(74) Vertreter: Tetzner, Michael
(86) Internationale Anmeldenummer: PCT/EP2019/074071
(87) Internationale Veröffentlichungsnummer: WO 2020/058037

(56) Entgegenhaltungen:
- CN-A- 106 394 685
- CN-A- 106 515 858
- DE-A1-102009 015 155
- DE-U1- 29 704 093

## Beschreibung

Die Erfindung betrifft ein Chassis für ein Straßenfahrzeug mit elektrischem Energiespeicher.

Das Bestreben, die Emissionen von CO₂, Stickoxiden, Feinstaub und anderer als schädlich eingestufter Substanzen zu minimieren, führt aktuell zu einer zunehmenden CO₂-Reglementierung sowie zu bereits bestehenden oder in Zukunft zu erwartenden Fahrverbote in Innenstädten für Fahrzeuge mit Verbrennungsmotor- oder zumindest für bestimmte Fahrzeugtypen. Hierdurch wird die Nutzung dieser Fahrzeuge zunehmend problematisch, was einerseits den Personenverkehr, andererseits aber auch bspw. den innerstädtischen Lieferverkehr betrifft. Unter diesem Aspekt gewinnen Elektrofahrzeuge an Bedeutung. Mit der zunehmenden Effizienz der hierfür notwendigen Energiequellen bzw. Energiespeicher werden elektrische Antriebe nicht nur für PKWs eine ernstzunehmende Alternative zu klassischen Verbrennungsmotoren, sondern auch für Nutzfahrzeuge wie Omnibusse oder LKWs. Eine besondere Problematik stellt in diesem Zusammenhang der Schutz der Energiespeicher dar, die in vielen Fällen einen erheblichen Raum einnehmen, bspw. mehr als der Kraftstofftank eines Fahrzeugs mit Verbrennungsmotor. Viele Batterien, aber auch ggf. Tanks für Brennstoffzellen, stellen bei Beschädigung ein erhebliches Brand- und/oder Explosionsrisiko dar. Derzeit wird dem dadurch begegnet, dass bspw. eine Batterie bzw. ein Batteriepack zum Schutz in einem Batteriekasten angeordnet wird. Ein solcher Batteriekasten weist zwar eine hohe mechanische Stabilität auf, gleichzeitig aber auch ein hohes Gewicht bzw. eine große Masse. Letzteres wirkt sich wiederum nachteilig auf die Gesamtmasse des Fahrzeugs aus und somit auf dessen Reichweite.

Die EP 2 712 748 A1 zeigt ein Chassis für ein elektrisch betriebenes Lastfahrzeug gemäß dem Oberbegriff des Anspruches 1, wonach die beiden Längsträger in einem Vorderabschnitt parallel zueinander verlaufen und in einem Mittelbereich nach außen abknicken, sodass sich der Abstand zwischen den beiden Längsträgern erweitert, bevor wieder ein Knick vorgesehen ist, sodass die Längsträger in einem Hinterabschnitt wieder etwa parallel zueinander verlaufen. Im Mittelabschnitt zwischen den beiden Längsträgern und einem Teil des Hinterabschnitts ist eine Antriebsbatterie vorgesehen, wobei zwischen der Antriebsbatterie und den beiden Längsträgern im Bereich des Hinterabschnitts ein Abstand vorgesehen ist.

Die DE 20 2014 102 281 U1 offenbart eine Fahrgestellkonstruktion für ein Fahrzeug mit parallel zueinander angeordneten Längsträgern zwischen denen eine mit Abstand zu den Längsträgern angeordnete Batterie vorgesehen ist. Zur Absorption einer seitlichen Aufprallkraft sind ferner Stützelemente zwischen der Batterie und den Längsträgen vorgesehen.

Aus der CN 106394685 A ist ferner ein Chassis für ein Straßenfahrzeug bekannt, das einen Vorder-, einen Mittel- und einen Hinterabschnitt aufweist. Im Mittelabschnitt sind lineare Längsträger vorgesehen, die zwischen sich einen Montageraum für einen Energiespeicher begrenzen, und auf deren Außenseite gewölbte Schweller zur Aufnahme von Crashenergie aufgesetzt sind.

Der Erfindung liegt daher die Aufgabe zu Grunde, bei einem Straßenfahrzeug mit elektrischem Energiespeicher einen optimierten Schutz des Energiespeichers zu realisieren.

Die Aufgabe wird erfindungsgemäß durch ein Chassis nach Anspruch 1 gelöst.

Durch die Erfindung wird ein Chassis für ein Straßenfahrzeug mit elektrischem Energiespeicher zu Verfügung gestellt. Bei dem Straßenfahrzeug kann es sich in diesem Zusammenhang um ein Kraftfahrzeug mit eigenem elektrischen Antrieb handeln, bspw. um einen PKW. Insbesondere kann das Straßenfahrzeug ein Nutzfahrzeug sein, bspw. ein Omnibus oder Lastkraftwagen, das wenigstens teilweise elektrisch angetrieben ist. Dabei kann es sich bspw. um einen rein batteriebetriebenes Fahrzeug, ein Fahrzeug mit Hybridantrieb oder ein mittels Brennstoffzellen angetriebenes Fahrzeug handeln. Hinsichtlich der Größe bzw. Masse des Straßenfahrzeugs bestehen in diesem Zusammenhang keine besonderen Einschränkungen. So kann es sich bspw. um einen Klein- oder Mittelklassewagen, ein SUV, einen Kleintransporter, aber auch um einen mittelschweren oder sogar schweren Lastkraftwagen handeln. Sofern es sich bei dem Nutzfahrzeug um einen Sattelzug handelt, kann das Chassis sowohl für die Zugmaschine als auch für den Auflieger vorgesehen sein. Statt um ein Kraftfahrzeug kann es sich bei dem Straßenfahrzeug allerdings auch um ein Fahrzeug ohne eigenen Antrieb handeln, bspw. um einen Anhänger, der einen elektrischen Energiespeicher für die eigene Energieversorgung und/oder die Energieversorgung eines ziehenden Kraftfahrzeugs aufweist.

Der Energiespeicher dient zur direkten Bereitstellung elektrischer Energie, also ohne bspw. die Zwischenschaltung eines Generators. Im Falle eines Hybridfahrzeugs ist er dem elektrischen Antrieb des Straßenfahrzeugs zugeordnet. Es kann sich um eine einzelne Batterie handeln, einen Batteriepack oder einen Tank, durch den eine Brennstoffzelle gespeist wird. Sofern das Straßenfahrzeug ein Kraftfahrzeug ist, handelt es sich in der Regel um einen Energiespeicher für einen elektrischen Antrieb des Straßenfahrzeugs, wobei selbstverständlich auch andere Systeme des Straßenfahrzeugs durch den Energiespeicher versorgt werden können.

Das Chassis weist zwei sich in Längsrichtung erstreckende Längsträger auf, die auf ihrer gesamten Länge im Abstand zueinander angeordnet und in einem Mittelabschnitt des Chassis gegenüber einem Vorderabschnitt und einem Hinterabschnitt in Querrichtung nach außen vorgewölbt sind. Hier und im Folgenden ist der Begriff "Längsrichtung" mit der X-Richtung bzw. X-Achse des Fahrzeugs im zusammengebauten Zustand gleichzusetzen. Ebenso entspricht der Begriff "Querrichtung" der Y-Richtung bzw. Y-Achse. Die Längsträger erstrecken sich in Längsrichtung, was nicht bedeutet, dass sie ganz oder auch nur teilweise parallel zur X-Achse verlaufen müssen, wenngleich dies möglich ist. Die Längsträger sind auf ihrer gesamten Länge im Abstand zueinander angeordnet, d.h. sie sind in Querrichtung zueinander beabstandet. Sie verlaufen dabei derart, dass sie in einem Mittelabschnitt gegenüber einem Vorderabschnitt und einem Hinterabschnitt in Querrichtung nach außen vorgewölbt sind. Der Vorderabschnitt ist dabei selbstverständlich in X-Richtung vor dem Mittelabschnitt angeordnet und der Hinterabschnitt hinter diesem. Normalerweise handelt es sich bei dem Vorderabschnitt um den vordersten Teil des Chassis und bei dem Hinterabschnitt um den hintersten Teil. Der Begriff "Mittelabschnitt" ist nicht dahingehend auszulegen, dass es sich hierbei um die geometrische Mitte des Chassis oder des Längsträgers handeln muss, sondern hierdurch wird lediglich eine Abfolge der drei genannten Abschnitte festgelegt. Im Mittelabschnitt ist der jeweilige Längsträger nach außen vorgewölbt, man könnte auch sagen, er ist dort von außen betrachtet konvex ausgebildet. Insbesondere verlaufen die Längsträger im Vorderabschnitt und/oder im Hinterabschnitt wenigstens überwiegend parallel zueinander. Die Längsträger können wenigstens überwiegend innerhalb der X-Y-Ebene verlaufen, allerdings sind auch Abweichungen hiervon möglich, so dass die Längsträger abschnittsweise zur Z-Achse hin geneigt sind.

Des Weiteren weist das Chassis eine Mehrzahl von sich in Querrichtung erstreckenden, die Längsträger verbindenden Querträgern auf. Die Querträger bilden zusammen mit den Längsträgern die strukturellen Hauptkomponenten des Chassis, welche wesentlich zu dessen mechanischen Eigenschaften und somit zu den mechanischen Eigenschaften, insbesondere zur Steifigkeit, des Straßenfahrzeugs insgesamt beitragen. Die Querträger erstrecken sich in Querrichtung, also entlang der Y-Achse, was allerdings wiederum nicht bedeutet, dass sie vollständig oder auch nur teilweise parallel zu dieser verlaufen müssen. Wenigstens ein Querträger kann wenigstens teilweise diagonal verlaufen, also schräg zur Y-Achse sowie zur X-Achse. Normalerweise ist wenigstens ein Querträger im Vorderabschnitt und wenigstens ein Querträger im Hinterabschnitt angeordnet.

Hinsichtlich der Materialien sowie des Profils bzw. der inneren Struktur sowohl der Längsträger als auch der Querträger bestehen im Rahmen der Erfindung keinerlei Einschränkungen. Jeder der Träger kann bspw. aus Stahl, Leichtmetall wie Aluminium, oder einer Aluminiumlegierung, faserverstärktem Kunststoff oder auch einer Kombination dieser Materialien gefertigt sein. Es können unterschiedlichste Profile wie bspw. U-Profile, Doppel-T-Profile, Kammerprofile etc. Verwendung finden. Jeder der genannten Träger kann auch Durchbrechungen aufweisen, die bspw. der Gewichtsersparnis dienen können. Der jeweilige Längsträger wird durch ein in Längsrichtung vom Vorderabschnitt bis zum Hinterabschnitt durchgehendes, einstückig gefertigtes Element gebildet. An ein solches durchgehendes Element können optional bereichsweise nicht-durchgehende Elemente angesetzt sein, z.B. um den Längsträger gezielt zu verstärken. Der jeweilige Längsträger kann allerdings auch aus einzelnen, separat vorgefertigten Teilen zusammengesetzt sein. Auch die Querträger können einteilig oder mehrteilig ausgebildet sein. Dabei ist es optional auch möglich, dass wenigstens ein Querträger teilweise einstückig mit wenigstens einem Längsträger gefertigt ist. D.h. ein Teil kann gleichzeitig einem (normalerweise mehrteiligen) Längsträger und einem (normalerweise mehrteiligen) Querträger zuzuordnen sein. Hinsichtlich der Verbindung der Querträger mit den Längsträgern kommen unterschiedlichste Verbindungen infrage, bspw. formschlüssige, kraftschlüssige oder stoffschlüssige Verbindungen oder auch Kombinationen derselben. Sofern ein Querträger und/oder Längsträger mehrteilig ausgebildet ist, können die einzelnen Teile desselben ebenfalls formschlüssig, kraftschlüssig und/oder stoffschlüssig verbunden sein.

Das Chassis weist im Mittelabschnitt zwischen den Längsträgern einen Montageraum für den Energiespeicher auf, in welchem der Energiespeicher in zusammengebautem Zustand angeordnet ist, wobei in Querrichtung zwischen dem Montageraum und dem jeweiligen Längsträger ein Pufferbereich ausgebildet ist. Der Montageraum ist derjenige Raum, den der Energiespeicher in zusammengebautem bzw. eingebautem Zustand einnimmt. Selbstverständlich können mehrere Energiespeicher vorgesehen sein bzw. der Energiespeicher kann mehrteilig ausgebildet sein. Man kann auch sagen, der Montageraum ist zur Anordnung oder zum Einbau des Energiespeichers vorgesehen und ausgebildet. Dieser Montageraum grenzt seitlich nicht an den jeweiligen Längsträger an, sondern es ist ein Pufferbereich ausgebildet. Dies ist im Allgemeinen ein Zwischenraum zwischen dem Längsträger und dem Montageraum, der entweder frei bleiben kann oder in dem wenigstens ein weiteres Bauteil angeordnet sein kann.

Das erfindungsgemäße Chassis ist in besonderer Weise auf den Schutz des Energiespeichers ausgerichtet. Dies wird zunächst dadurch erreicht, dass der Energiespeicher in zusammengebautem Zustand zwischen den Längsträgern angeordnet ist. Des Weiteren verhindert die nach außen gewölbte Struktur der Längsträger im Mittelabschnitt im Fall eines Seitenaufpralls eine direkte Intrusion der Längsträger in den zu schützenden Energiespeicher, zu der es bei einem gerade verlaufenden Längsträger leichter kommen könnte.. D.h. der Längsträger wird bei einer seitlich einwirkenden Kraft weniger leicht nach innen eingedrückt als bspw. ein gerade verlaufender Längsträger. Darüber hinaus bedeutet das Vorhandensein des Pufferbereichs, dass selbst dann, wenn der Längsträger eingedrückt wird, sich dies nicht unmittelbar auf den Energiespeicher auswirken kann. Hierdurch können Batterien oder unter Druck stehende Tanks für eine Brennstoffzelle wirkungsvoll vor Beschädigungen geschützt werden. Aufgrund des systemischen Schutzes des Energiespeichers durch die Chassis-Struktur kann bspw. auf einen besonders stabil und somit schwer ausgestalteten Batteriekasten verzichtet werden. Selbstverständlich kann ein dem Energiespeicher zugeordneter Kasten, normalerweise in leichterer Ausführung, ergänzend zu dem erfindungsgemäßen Chassis eingesetzt werden, um den Energiespeicher noch effektiver zu schützen.

Gemäß einer Ausführungsform weist das Chassis eine Haltevorrichtung für den Energiespeicher auf, welche den Montageraum definiert. Die Haltevorrichtung, die auch als Anbindungsvorrichtung oder als Aufnahme bezeichnet werden kann, ist dazu ausgebildet, dass der Energiespeicher wenigstens indirekt an ihr befestigt wird bzw. durch sie gehalten wird. Durch die Anordnung und Dimensionierung der Haltevorrichtung ist der Montageraum definiert. Die Verbindung des Energiespeichers mit der Haltevorrichtung kann dabei auch indirekt, also durch wenigstens ein zwischengeordnetes Element gegeben sein, bspw. eine Schraube, eine Klemmvorrichtung oder dergleichen. Unter Umständen können derartige Elemente allerdings auch als Teil der Haltevorrichtung bzw. des Chassis angesehen werden.

Bevorzugt sind die Längsträger im Mittelabschnitt wenigstens überwiegend gekrümmt ausgebildet. D.h., wenigstens überwiegend, ggf. auch durchgehend weisen die Längsträger im Mittelabschnitt keinerlei Knicke auf, sondern ihr Verlauf entspricht einer Krümmung bzw. Kurve. Insbesondere können die Längsträger entlang wenigstens 70%, wenigstens 80% oder auch wenigstens 90% des Mittelabschnitts gekrümmt ausgebildet sein. Dabei können die beiden Längsträger abschnittsweise entlang einer Ellipse oder einer zumindest ellipsenähnlichen Form verlaufen.

Weiterhin ist es bevorzugt, dass die Längsträger einen im Mittelabschnitt gegenüber dem Vorderabschnitt und dem Hinterabschnitt verstärkten Querschnitt aufweisen. Anders ausgedrückt, der Querschnitt der Längsträger ist nicht entlang ihrer gesamten Länge konstant, sondern er ist im Vorderabschnitt und im Hinterabschnitt im Vergleich zum Mittelabschnitt schwächer. Dabei ist bevorzugt vorgesehen, dass das Flächenträgheitsmoment um die Y-Achse im Mittelabschnitt größer ist als im Vorderabschnitt und im Hinterabschnitt. Normalerweise ist wenigstens eine Fahrzeugachse im Vorderabschnitt und wenigstens eine Fahrzeugachse im Hinterabschnitt angeordnet, während der Mittelabschnitt dazwischen gewissermaßen frei trägt. Durch die Verstärkung des Querschnitts wird also im Allgemeinen die Steifigkeit des Chassis gezielt dort verstärkt, wo die stärksten Biegemomente zu erwarten sind. Dadurch, dass der Querschnitt im Mittelabschnitt verstärkt ist, kann außerdem der Schutz des elektrischen Energiespeichers weiter verbessert werden. Dies kann im Hinblick auf einen Seitenaufprall insbesondere dadurch erreicht werden, dass im Mittelabschnitt das Flächenträgheitsmoment um die Z-Achse größer ist als im Vorderabschnitt und im Hinterabschnitt. Die beschriebene selektive Verstärkung des Querschnitts kann dadurch erreicht werden, dass Material im Vorder- und Hinterabschnitt entfernt wird, und/oder dadurch, dass im Mittelabschnitt Material zusätzlich angefügt wird. Die entsprechende Verstärkung kann unterschiedlich positioniert sein, bspw. an einer Innen- oder Außenseite, an einer Oberseite oder insbesondere an einer Unterseite des Längsträgers. Es wäre auch denkbar, wenngleich dies fertigungstechnisch im Allgemeinen komplizierter ist, dass die Verstärkung im Inneren des Längsträgers angeordnet ist. Selbstverständlich sind auch Kombinationen unterschiedlich positionierter Verstärkungen möglich. Optional können auch lastangepasste Halbzeuge (tailored blanks) genutzt werden oder es können Umformverfahren eingesetzt werden, durch welche der Querschnitt des Längsträgers variabel eingestellt werden kann. Beispielsweise im Fall von U-Profilen könnte ein flexibles Walzprofilieren durchgeführt werden, um die Lastanpassung zu realisieren.

Hinsichtlich der Position der Querträger sind unterschiedlichste Optionen gegeben. Gemäß einer bevorzugten Ausgestaltung ist in Übergangsbereichen vom Vorderabschnitt zum Mittelabschnitt sowie vom Mittelabschnitt zum Hinterabschnitt jeweils ein Querträger angeordnet. Der jeweilige Übergangsbereich kann dabei teilweise dem einen sowie dem anderen Abschnitt zuzuordnen sein. Bspw. kann der Übergangsbereich vom Vorderabschnitt zum Mittelabschnitt Teile des Vorderabschnitts aufweisen, die benachbart zum Mittelabschnitt sind, sowie Teile des Mittelabschnitts, die benachbart zum Vorderabschnitt sind. Die in den genannten Übergangsbereichen angeordneten Querträger sind in Längsrichtung normalerweise benachbart zum Montageraum vor bzw. hinter diesem angeordnet. Sie bewirken selbstverständlich eine lokal erhöhte Steifigkeit der mit ihnen verbundenen Längsträger gegenüber seitlich einwirkenden Kräften. Da diese Stabilisierung in der Nähe des Montageraums gegeben ist, wird dessen Schutz insbesondere gegenüber seitlichen Kräften weiter verbessert. Außerdem können sie zusammen mit den nach außen gewölbten Teilen der Längsträger eine vergleichsweise schwer zu verformende Einheit zu bilden, die den innenliegenden Montageraum effektiv schützt. Durch die gezielte und abgestimmte Gestaltung von Längs- und Querträgern lässt sich im Mittelabschnitt so eine Systemsteifigkeit des Chassis einstellen, welche in der Lage ist, Energie im Crashfall gezielt zu absorbieren und den innenliegenden Montageraum bestmöglich zu schützen. Optional können die in den jeweiligen Übergangsbereichen angeordneten Querträger ihrerseits eine gewölbte Form aufweisen, die sich zusammen mit der gewölbten Form der Längsträger im Mittelabschnitt zu einer ovalen Gesamtform ergänzt.

In einer einfachsten Ausgestaltung kann der Pufferbereich einfach ein leerer Raum sein, in welchen der Längsträger im Fall einer Kraftbeaufschlagung intrudieren kann, ohne unmittelbar in den Montageraum einzudringen. Gemäß einer Ausgestaltung ist die Haltevorrichtung durch wenigstens ein sich in Querrichtung erstreckendes Verstrebungselement mit dem Längsträger verbunden. Wenigstens ein Verstrebungselement kann in dem Pufferbereich angeordnet sein. Alternativ oder ergänzend kann wenigstens ein Verstrebungselement bezüglich der Z-Achse oberhalb oder unterhalb des Pufferbereichs angeordnet sein. Das Verstrebungselement erstreckt sich in Querrichtung, also entlang der Y-Achse. Es kann dabei parallel zur Y-Achse verlaufen. Insbesondere kann allerdings auch wenigstens ein Verstrebungselement wenigstens teilweise diagonal bezüglich der X-Y-Ebene verlaufen, also schräg zur X-Achse sowie zur Y-Achse. D.h., wenn man die Projektion des Verstrebungselements auf die X-Y-Ebene betrachtet, verläuft diese schräg zur X-Achse sowie zur Y-Achse. Es versteht sich, dass eine Mehrzahl von Verstrebungselementen zwischen jedem Längsträger und der Haltevorrichtung vorgesehen sein können. Die oben für die Längsträger und Querträger genannten Materialien können auch zur Fertigung der Verstrebungselemente eingesetzt werden. Das wenigstens eine Verstrebungselement sorgt für eine Anbindung der Haltevorrichtung innerhalb des Chassis bzw. verbessert diese, was sich auf die Anbindung des Energiespeichers an das Chassis auswirkt. Darüber hinaus kann die Verbindung zwischen der Haltevorrichtung und dem Längsträger für eine gegenseitige Stabilisierung sorgen, die bspw. einer Deformation des Längsträgers entgegenwirkt und im Fall einer Kraftbeaufschlagung von außen zur gezielten Energieaufnahme dient.

Ebenfalls bevorzugt ist es, dass in dem Pufferbereich wenigstens ein Crashelement angeordnet ist. Ein solches Crashelement ist dazu ausgebildet, bei einem Unfall durch Deformation möglichst viel Energie zu absorbieren und hierdurch andere Elemente vor Deformation zu schützen. Es kann bspw. aus aufgeschäumtem Aluminium, Kunststoff-Metall-Hybriden oder anderen Materialien bestehen. Diese Ausführungsform kann mit der oben genannten kombiniert werden, so dass wenigstens ein Crashelement benachbart zu wenigstens einem Verstrebungselement im Pufferbereich angeordnet ist.

Es wäre auch denkbar, ein Crashelement in ein Verstrebungselement zu integrieren oder umgekehrt. Schließlich könnte ein Verstrebungselement selber als Crashelement ausgebildet sein, derart, dass es eine Verbindung zwischen dem Längsträger und der Haltevorrichtung herstellt, die im normalen Betrieb stabilisierend wirkt, bei einem Unfall allerdings planmäßig vergleichsweise leicht deformiert wird, um möglichst viel Energie zu absorbieren. Es versteht sich, dass durch das Vorhandensein eines Crashelements der Schutz des Energiespeichers weiter verbessert wird.

Um den seitlichen Schutz des Energiespeichers weiter zu erhöhen, ist es bevorzugt, dass die Haltevorrichtung in Querrichtung beiderseits des Montageraums zwei sich in Längsrichtung erstreckende, wenigstens indirekt mit einem Längsträger verbundene Rahmenlängselemente aufweist. Die Rahmenlängselemente können dabei optional auch als Positionierungshilfen bei der Montage des Energiespeichers dienen. Insbesondere dienen sie allerdings dazu, unmittelbar seitlich des Montageraums nochmals eine schützende Struktur zu bilden, die ein Eindringen von Teilen des Chassis oder anderer Elemente in den Montageraum verhindert. Die Rahmenlängselemente erstrecken sich in Längsrichtung normalerweise wenigstens entlang der gesamten Länge des Montageraums. Sie können seitlich bspw. durch die o.g. Verstrebungselemente mit den Längsträgern verbunden sein. Zusätzlich oder alternativ können Sie mit Ihren Endbereichen direkt mit den Längsträgern verbunden sein oder aber bspw. mit den o.g. Querträgern in den Übergangsbereichen.

Eine weitere Stabilisierung lässt sich dadurch erreichen, dass die Rahmenlängselemente durch wenigstens eine sich in Querrichtung erstreckende Rahmenverstrebung miteinander verbunden sind. Eine solche Rahmenverstrebung erstreckt sich bezüglich der Y-Achse zwischen den Rahmenlängselementen. Sie kann dabei in Z-Richtung gegenüber dem Montageraum versetzt sein, diesen also gewissermaßen oberhalb oder unterhalb umgehen. Alternativ kann die Rahmenverstrebung allerdings auch durch den Montageraum hindurchgeführt sein und ggf. sogar in den Energiespeicher integriert sein. So könnte bspw. ein Batteriepack eine oder mehrere Rahmenverstrebungen aufweisen, die zwischen einzelnen Batterien bzw. Batteriemodulen hindurch verlaufen. Es versteht sich, dass mehrere Rahmenverstrebungen vorhanden sein können, was die Stabilisierung im Allgemeinen verbessert. Die jeweilige Rahmenverstrebung kann parallel zur Y-Achse verlaufen oder aber auch wenigstens teilweise schräg zu dieser, also diagonal. Als Materialien für die Rahmenverstrebung können sämtliche oben bezüglich der Längsträger und der Querträger genannten Materialien verwendet werden. Es sind Ausgestaltungen denkbar, bei denen die Rahmenverstrebung in ein Verstrebungselement übergeht bzw. einstückig mit diesem gefertigt ist. Es sind auch Ausgestaltungen denkbar, bei denen wenigstens eine Rahmenverstrebung einstückig mit wenigstens einem Rahmenlängselement gefertigt ist.

Alternativ oder ergänzend zu einer solchen Kombination aus einer Rahmenverstrebung und einem Verstrebungselement, welche jeweils mit den Rahmenlängselementen verbunden sind, wäre es auch denkbar, dass die Längsträger im Mittelabschnitt durch wenigstens eine sich in Querrichtung erstreckende Mittelverstrebung verbunden sind, die gegenüber der Haltevorrichtung freitragend geführt ist. D.h., diese Mittelverstrebung ist mit beiden Längsträgern im Mittelabschnitt verbunden, weist allerdings keine Anbindung an die Haltevorrichtung bzw., soweit vorhanden, an die Rahmenlängselemente auf. Somit kann bei einem Crash durch die Mittelverstrebung auch keine Kraft aus einem Längsträger in die Haltevorrichtung eingeleitet werden, was unter Umständen die Haltevorrichtung und den daran angeordneten Energiespeicher vor Beschädigung schützen kann. Jede Mittelverstrebung kann einstückig gefertigt sein oder aus mehreren separat gefertigten Teilen zusammengesetzt sein. Eine solche Mittelverstrebung, die auch als zusätzlicher, im Mittelabschnitt angeordneter Querträger aufgefasst werden kann, könnte dann bspw. bezüglich der Z-Achse oberhalb oder unterhalb des Montageraums verlaufen.

Alternativ oder ergänzend zu der hier beschriebenen wenigstens einen Rahmenverstrebung könnte der Energiespeicher auch wenigstens eine in Querrichtung verlaufende Verstrebung aufweisen, die nicht oder zumindest nicht direkt mit den Rahmenlängselementen verbunden ist. Sofern eine indirekte Verbindung mit den Rahmenlängselementen gegeben ist, bspw. über die Wandung eines Batteriekastens, kann eine derartige Verstrebung auch als Rahmenverstrebung angesehen werden.

Die Haltevorrichtung kann einen den Montageraum umlaufend umgebenden Rahmen aufweisen. Der Rahmen verläuft dabei bezüglich der X-Y-Ebene um den Montageraum herum. Ein derartiger Rahmen kann die o.g. in Querrichtung beiderseits des Montageraums angeordneten Rahmenlängselemente umfassen, wobei diese allerdings, ggf. einstückig, durch in Längsrichtung vor und hinter dem Montageraum angeordnete Rahmenquerelemente verbunden sind. Ein solcher umlaufender Rahmen bewirkt nochmals eine verbesserte Kapselung des Montageraums und des darin aufgenommenen Energiespeichers. Der Rahmen kann in Querrichtung durch Verstrebungselemente und/oder Crashelemente mit den Längsträgern verbunden sein und in Längsrichtung bspw. mit den o.g. Querträgern in den Übergangsbereichen. Es versteht sich, dass die Rahmenlängselemente des Rahmens durch wenigstens eine Rahmenverstrebung miteinander verbunden sein können. Wenigstens eine Rahmenverstrebung kann auch einstückig mit dem Rahmen ausgebildet sein. Die oben erwähnten Verstrebungselemente ebenso wie die Rahmenverstrebungen sind bevorzugt nach Art eines Trägers gestreckt ausgebildet.

Allgemein kann es vorteilhaft sein, wenn der Rahmen nur indirekt mit den Längsträgern verbunden ist. Auf diese Weise können auf die Längsträger einwirkende Kräfte bspw. bei einem Seitenaufprall nicht unmittelbar an den Rahmen weitergegeben werden. Hierdurch wird der Rahmen besser vor Deformation geschützt, was wiederum dem Schutz des innerhalb angeordneten Energiespeichers zugutekommt.

Details der Erfindung werden nachfolgend anhand von Ausführungsbeispielen mit Bezug auf die Figuren erläutert. Hierbei zeigt
- Fig. 1: eine perspektivische Darstellung einer ersten Ausführungsform eines erfindungsgemäßen Chassis mit einem Batteriepack;
- Fig. 2: eine perspektivische Darstellung des Chassis aus Fig. 1 ohne Batteriepack;
- Fig. 3: eine perspektivische Darstellung einer zweiten Ausführungsform eines erfindungsgemäßen Chassis mit einem Batteriepack; sowie
- Fig. 4: eine perspektivische Darstellung einer dritten Ausführungsform eines erfindungsgemäßen Chassis mit einem Batteriepack.

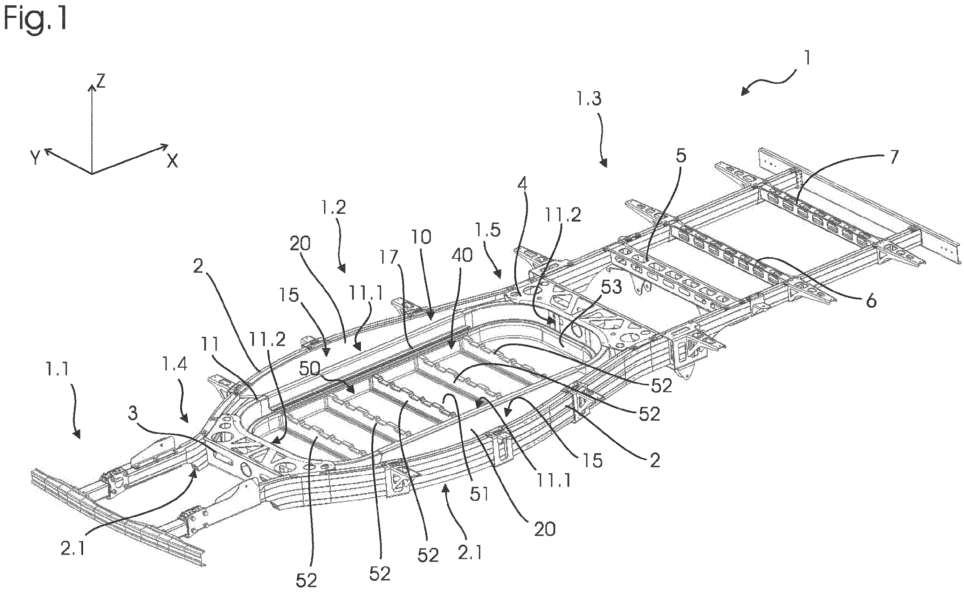

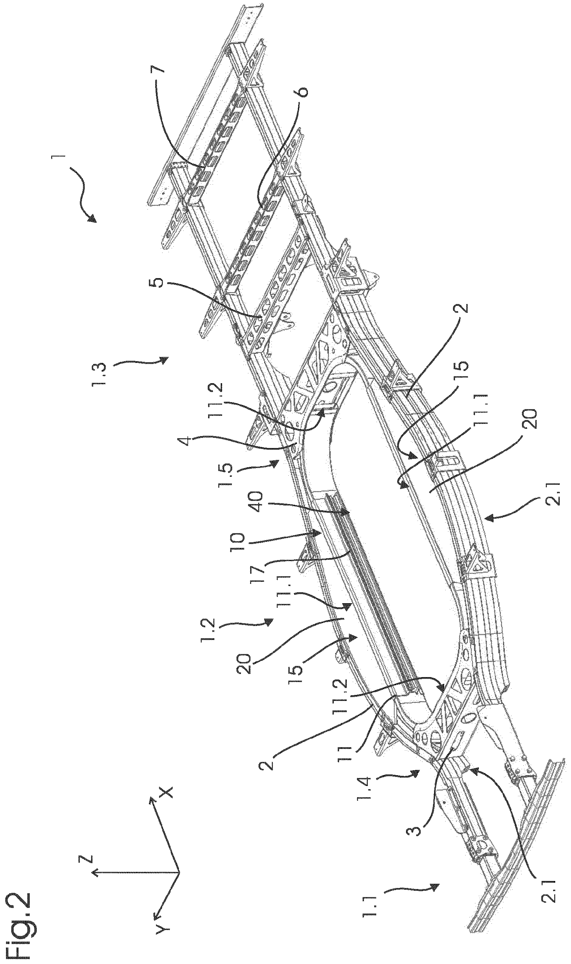

Fig. 1 und 2 zeigen in perspektivischer Darstellung eine erste Ausführungsform eines erfindungsgemäßen Chassis 1 für ein Straßenfahrzeug, bspw. für einen leichten oder mittelschweren LKW. Das Chassis 1 weist zwei Längsträger 2 auf, die sich entlang der X-Achse erstrecken. In einem Vorderabschnitt 1.1 sowie in einem Hinterabschnitt 1.3 des Chassis 1 verlaufen die Längsträger 2 parallel zueinander. In einem dazwischenliegenden Mittelabschnitt 1.2 sind die Längsträger 2 in Richtung der Y-Achse nach außen vorgewölbt. Der Verlauf der Längsträger 2 ist dabei innerhalb des gesamten Mittelabschnitts 1.2 konvex gekrümmt. In einem ersten Übergangsbereich 1.4 vom Vorderabschnitt 1.1 zum Mittelabschnitt 1.2 sowie in einem zweiten Übergangsbereich 1.5 vom Mittelabschnitt 1.2 zum Hinterabschnitt 1.3 sind die Längsträger 2 konkav gekrümmt. Der innere Aufbau der Längsträger 2 ist in diesem Zusammenhang beliebig, sie können bspw. aus Stahlblech, Aluminium-Strangpressprofilen oder unterschiedlichen anderen Materialien bestehen.

Die Längsträger sind durch mehrere Querträger 3 - 7 miteinander verbunden, welche sich entlang der Y-Achse erstrecken. Ein erster Querträger 3 mit einer durchbrochenen, gitterartigen Struktur ist im ersten Übergangsbereich 1.4 angeordnet und ein zweiter Querträger 4 ist im zweiten Übergangsbereich 1.5 angeordnet. Des Weiteren sind im Hinterabschnitt 1.3 ein dritter, vierter und fünfter Querträger 5, 6, 7 vorgesehen. Auch diese weisen aus Gründen der Gewichtsersparnis eine durchbrochene Struktur auf. Die hier gezeigte durchbrochene Struktur ist selbstverständlich rein beispielhaft zu verstehen und jeder der Querträger 3 - 7 könnte auch eine geschlossene Struktur aufweisen. Hinsichtlich der Verbindung zwischen den Längsträgern 2 und den Querträgern 3 - 7 bestehen unterschiedliche Möglichkeiten, wobei formschlüssige, kraftschlüssige und/oder stoffschlüssige Verbindungen genutzt werden können. Gleiches gilt für nachfolgend noch erwähnten Verbindungen zwischen anderen Elementen.

Im Mittelabschnitt 1.2 ist zwischen den Längsträgern 2 eine Haltevorrichtung 10 für einen Batteriepack 50 angeordnet, die einen Rahmen 11 aufweist. Die Haltevorrichtung 10 definiert einen Montageraum 40 für den Batteriepack 50, der den Energiespeicher des Straßenfahrzeugs darstellt. Dabei umläuft der Rahmen 11 den Montageraum 40 vollständig innerhalb derX-Y-Ebene und weist zwei Rahmenlängselemente 11.1 auf, die in Querrichtung beiderseits des Montageraums 40 angeordnet sind, sowie zwei Rahmenquerelemente 11.2, die in Längsrichtung beiderseits des Montageraums 40 angeordnet sind. An jedem der Rahmenlängselemente 11.1 ist jeweils eine Halteschiene 17 befestigt, an welcher wiederum der Batteriepack 50 unmittelbar befestigt ist. Die Halteschiene 17 ist insbesondere auch in Fig. 2 erkennbar, die das Chassis 1 ohne den Batteriepack 50 zeigt.

Die Haltevorrichtung 10 ist so ausgebildet, dass zwischen dem Montageraum 40 und dem jeweils benachbarten Längsträger 2 ein Pufferbereich 15 ausgebildet ist. In diesem Pufferbereich ist jeweils wenigstens ein Crashelement 20 angeordnet, das bspw. aus aufgeschäumtem Aluminium, Kunststoff-Metall-Hybriden oder anderen Materialien bestehen kann. Die Funktion des Crashelements 20 besteht darin, bei einem Unfall, insbesondere bei einem Seitenaufprall, durch Deformation Energie zu absorbieren und so andere Bauteile, insbesondere den Rahmen 11 mit dem darin angeordneten Batteriepack 50, vor Deformation zu schützen. Durch die nach außen gewölbte Form der Längsträger 2 im Mittelabschnitt 1.2 werden diese bei einem Seitenaufprall weniger leicht nach innen eingedrückt, wodurch der Schutz für den Batteriepack 50 weiter verbessert wird. Um die mechanischen Eigenschaften der Längsträger 2 im Mittelabschnitt 1.2 weiter zu verbessern, weisen diese dort einen gegenüber dem Vorderabschnitt 1.1 sowie dem Hinterabschnitt 1.3 verstärkten Querschnitt 2.1 auf. In dem hier gezeigten Beispiel erstreckt sich das Profil des Längsträgers 2 im Mittelabschnitt 1.2 in Z-Richtung weiter nach unten, man könnte auch sagen, die Profilhöhe ändert sich. Hierdurch kann insbesondere das Flächenträgheitsmoment um die Y-Achse im Mittelabschnitt 1.2 verbessert werden, bspw. um dort auftretende Biegemomente besser aufzunehmen. Es sind allerdings auch andere Verstärkungsmöglichkeiten denkbar, bspw. derart, dass eine Verstärkung in Y-Richtung außen- oder innenseitig des Längsträgers 2 angeordnet ist. Dadurch kann bspw. eine veränderliche Profilbreite realisiert werden.

Außerdem schützt der Rahmen 11 den Batteriepack 50. Dabei ist der Rahmen 11 nur indirekt über den ersten und zweiten Querträger 3, 4 mit den Längsträgern 2 verbunden, womit sich eine Verformung des jeweiligen Längsträgers 2 nicht unmittelbar auf den Rahmen 11 übertragen kann. Die in dem Batteriepack 50 enthaltenen (hier aus Darstellungsgründen weggelassenen) Batteriemodule werden zusätzlich durch die Struktur des Batteriepacks 50 geschützt. Dieser weist unterseitig einen Boden 51 sowie einen hier nicht dargestellten Deckel auf, welche durch eine umlaufende Wandung 53 verbunden sind. Innerhalb der Wandung 53 verlaufen Verstrebungselemente 52 in Querrichtung, die die Struktur des Batteriepacks 50 insgesamt weiter verstärken.

Zwischen den Verstrebungselementen 52 sind die eigentlichen Batteriemodule angeordnet.

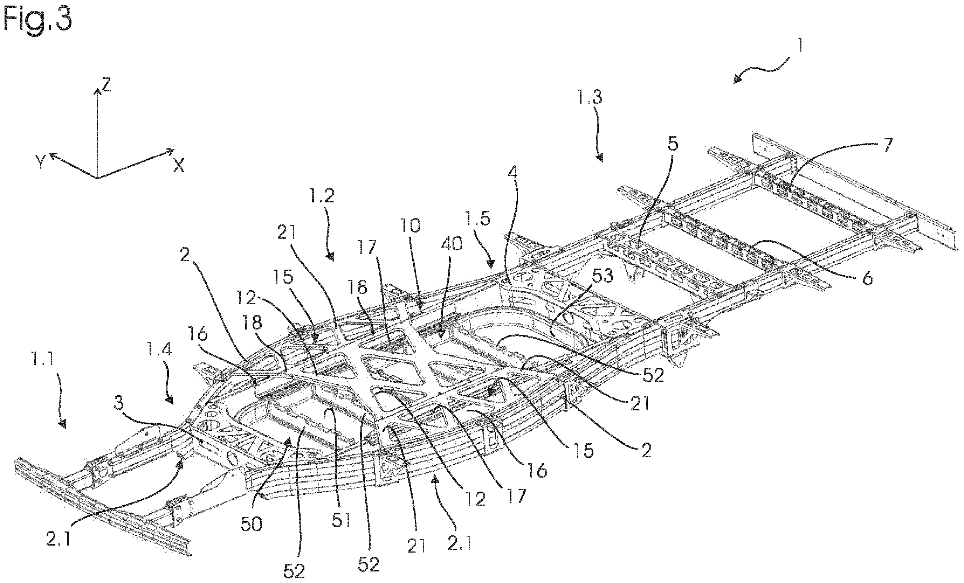

Fig. 3 zeigt in perspektivischer Darstellung eine zweite Ausführungsform eines erfindungsgemäßen Chassis 1 für ein Straßenfahrzeug. Dieses ähnelt weitgehend dem in Fig. 1 gezeigten Chassis 1 und wird insoweit nicht nochmals beschrieben. Die Haltevorrichtung 10 weist in diesem Fall keinen umlaufenden Rahmen auf, sondern zwei separat gefertigte, in Längsrichtung verlaufende Rahmenlängselemente 16, an denen wiederum Halteschienen 17 für den Batteriepack 50 befestigt sind. Die Rahmenlängselemente 16 sind mit dem ersten und zweiten Querträger 3, 4 verbunden. Im Pufferbereich 15 zwischen dem jeweiligen Rahmenlängselement 16 und dem benachbarten Längsträger 2 bzw. unmittelbar oberhalb des Pufferbereichs 15 sind eine Mehrzahl von diagonal verlaufenden Verstrebungselementen 21 angeordnet, die den Längsträger 2 mit dem Rahmenlängselement 16 verbinden. Durch das Vorhandensein der Verstrebungselemente 21 kann eine gegenseitige Stabilisierung und Versteifung von Längsträger 2 und Rahmenlängselement 16 erreicht werden. Des Weiteren sind eine Mehrzahl von diagonal verlaufenden Rahmenverstrebungen 12 vorgesehen, die einerseits mit den Rahmenlängselementen 16 verbunden sind und diese so gegeneinander abstützen, andererseits mit den Verstrebungselementen 21 verbunden sind, so dass hierüber eine weitere Abstützung der Längsträger 2 in Querrichtung (entlang der Y-Achse) erzielt wird. Die Verbindung sowohl der Rahmenverstrebungen 12 als auch der Verstrebungselementen 21 mit den Rahmenlängselementen 16 ist hier beispielhaft durch eine Mehrzahl von Schrauben 18 realisiert. Optional können die Rahmenverstrebungen 12 auch einstückig mit den Verstrebungselementen 21 ausgebildet sein.

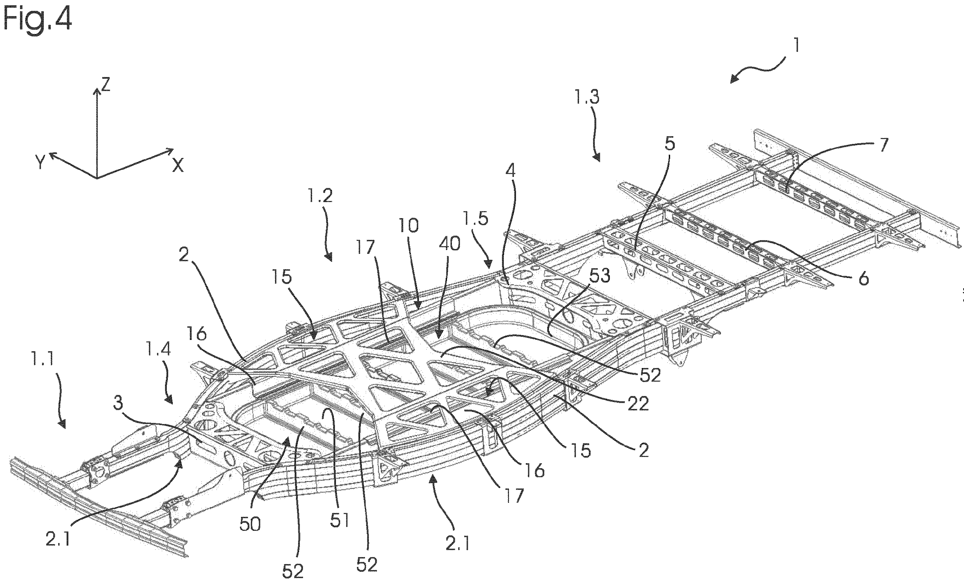

Fig. 4 zeigt in perspektivischer Darstellung eine dritte Ausführungsform eines erfindungsgemäßen Chassis 1 für ein Straßenfahrzeug. Diese ist weitgehend identisch mit der in Fig. 3 gezeigten Ausführungsform und wird insoweit nicht nochmals erläutert. In diesem Fall ist allerdings statt der Rahmenverstrebungen 12 und Verstrebungselemente 21, welche jeweils mit den Rahmenlängselementen 16 verbunden sind, eine von einem Längsträger 2 zum anderen Längsträger 2 durchgehende Mittelverstrebung 22 vorgesehen, die nicht mit den Rahmenlängselementen 16 verbunden ist. Die Mittelverstrebung 22 ist in diesem Ausführungsbeispiel weitgehend mit der zusammengesetzten Struktur aus Rahmenverstrebungen 12 und Verstrebungselementen 21 in Fig. 3 identisch, ist allerdings im Gegensatz zu diesen gegenüber der Haltevorrichtung 10 und insbesondere gegenüber den Rahmenlängselementen 16 freitragend geführt. Statt einer einzelnen Mittelverstrebung 22 könnte man auch eine Mehrzahl von Mittelverstrebungen 22 vorsehen. Die Mittelverstrebung 22 ist hier aus mehreren Stücken zusammengesetzt, es wäre allerdings auch eine einstückige Fertigung möglich. Man könnte die Mittelverstrebung 22 auch als zusätzlichen Querträger bezeichnen. Vorteilhaft kann bei dieser Alternative sein, dass diese Mittelverstrebung 22 primär keine Kraft auf die Rahmenlängselemente 16 und den Batteriepack 50 überträgt. Andererseits könnte sich diese Mittelverstrebung 22 bei fehlender Anbindung an die Rahmenlängselemente 16 in Z- Richtung nach oben ausbeulen, wenn eine seitliche Kraft auf sie einwirkt. Dies kann unter Umständen mit der in Fig. 3 gezeigten Ausführungsform besser unterbunden werden.

Bei den in Fig. 3 und 4 gezeigten Ausführungsformen weist der Pufferbereich 15 kein ausschließlich zur Energieabsorption vorgesehenes Crashelement auf. Optional könnten aber ein oder mehrere Crashelemente zwischen bzw. über oder unter den Verstrebungselementen 21 bzw. der Mittelverstrebung 22 angeordnet sein. Auch wäre es denkbar, dass die Verstrebungselemente 21 bzw. die Mittelverstrebung 22 ihrerseits als Crashelemente ausgebildet sind, die planmäßig durch Deformation Energie absorbieren können.

Es versteht sich, dass einzelne Merkmale der in Fig. 1 und 3 bzw. 4 gezeigten Ausführungsformen miteinander kombiniert werden können. So könnten bspw. die in Fig. 3 gezeigten Rahmenverstrebungen 12 und Verstrebungselemente 21 oder die in Fig. 4 gezeigte Mittelverstrebung 22 mit dem in Fig. 1 gezeigten umlaufenden Rahmen 11 kombiniert werden.

### Bezugszeichenliste

- 1: Chassis
- 1.1: Vorderabschnitt
- 1.2: Mittelabschnitt
- 1.3: Hinterabschnitt
- 1.4, 1.5: Übergangsbereich
- 2: Längsträger
- 2.1: verstärkter Querschnitt
- 3 - 8: Querträger
- 10: Haltevorrichtung
- 11: Rahmen
- 11.1, 16: Rahmenlängselement
- 11.2: Rahmenquerelement
- 12: Rahmenverstrebung
- 15: Pufferbereich
- 17: Halteschiene
- 20: Crashelement
- 21,52: Verstrebungselement
- 22: Mittelverstrebung
- 40: Montageraum
- 50: Batteriepack
- 51: Boden
- 53: Wand
- X: X-Achse
- Y: Y-Achse
- Z: Z-Achse

## Patentansprüche

1. Chassis (1) für ein Straßenfahrzeug mit elektrischem Energiespeicher (50), mit
- zwei sich in Längsrichtung erstreckenden Längsträgern (2), die auf ihrer gesamten Länge im Abstand zueinander angeordnet sind und einen Vorderabschnitt (1.1), einen Mittelabschnitt (1.2), und einen Hinterabschnitt (1.3) aufweisen,
wobei die Längsträger (2) jeweils durch ein in Längsrichtung vom Vorderabschnitt (1.1) bis zum Hinterabschnitt (1.3) durchgehendes, einstückig gefertigtes Element gebildet werden und die Längsträger (2) im Vorderabschnitt (1.1) und/oder im Hinterabschnitt (1.3) wenigstens überwiegend parallel zueinander verlaufen
sowie
- einer Mehrzahl von sich in Querrichtung erstreckenden, die Längsträger (2) verbindenden Querträgern (3 - 7),
wobei das Chassis (1) im Mittelabschnitt (1.2) zwischen den Längsträgern (2) einen Montageraum (40) für den Energiespeicher (50) aufweist, in welchem der Energiespeicher (50) in zusammengebautem Zustand angeordnet ist,
**dadurch gekennzeichnet, dass** die Längsträger in dem Mittelabschnitt (1.2) gegenüber dem Vorderabschnitt (1.1) und dem Hinterabschnitt (1.3) in Querrichtung nach außen vorgewölbt sind und
wobei in Querrichtung zwischen dem Montageraum (40) und dem jeweiligen Längsträger (2) ein Pufferbereich (15) ausgebildet ist.

2. Chassis nach Anspruch 1, **dadurch gekennzeichnet, dass** dieses eine Haltevorrichtung (10) für den Energiespeicher (50) aufweist, welche den Montageraum (40) definiert.

3. Chassis nach einem der vorherigen Ansprüche, **dadurch gekennzeichnet, dass** die Längsträger (2) im Mittelabschnitt (1.2) wenigstens überwiegend gekrümmt ausgebildet sind.

4. Chassis nach einem der vorherigen Ansprüche, **dadurch gekennzeichnet, dass** die Längsträger (2) einen im Mittelabschnitt (1.2) gegenüber dem Vorderabschnitt (1.1) und dem Hinterabschnitt (1.3) verstärkten Querschnitt (2.1) aufweisen.

5. Chassis nach einem der vorherigen Ansprüche, **dadurch gekennzeichnet, dass** in Übergangsbereichen (1.4, 1.5) vom Vorderabschnitt (1.1) zum Mittelabschnitt (1.2) sowie vom Mittelabschnitt (1.2) zum Hinterabschnitt (1.3) jeweils ein Querträger (3, 4) angeordnet ist.

6. Chassis nach einem der vorherigen Ansprüche, **dadurch gekennzeichnet, dass** die Haltevorrichtung (10) durch wenigstens ein sich in Querrichtung erstreckendes Verstrebungselement (21) mit dem Längsträger (2) verbunden ist.

7. Chassis nach einem der vorherigen Ansprüche, **dadurch gekennzeichnet, dass** in dem Pufferbereich (15) wenigstens ein Crashelement (20) angeordnet ist.

8. Chassis nach einem der vorherigen Ansprüche, **dadurch gekennzeichnet, dass** die Haltevorrichtung (10) in Querrichtung beiderseits des Montageraums (50) zwei sich in Längsrichtung erstreckende, wenigstens indirekt mit einem Längsträger (2) verbundene Rahmenlängselemente (11.1, 16) aufweist.

9. Chassis nach Anspruch 8, **dadurch gekennzeichnet, dass** die Rahmenlängselemente (11.1, 16) durch wenigstens eine sich in Querrichtung erstreckende Rahmenverstrebung (12) miteinander verbunden sind.

10. Chassis nach einem der Ansprüche 2 - 9, **dadurch gekennzeichnet, dass** die Haltevorrichtung (10) einen den Montageraum (40) umlaufend umgebenden Rahmen (11) aufweist.

## Claims

1. Chassis (1) for a road vehicle having an electrical energy store (50), comprising
- two longitudinal beams (2) which extend in the longitudinal direction, are spaced apart from one another over the entire length thereof, and have a front portion (1.1), a middle portion (1.2), and a rear portion (1.3),
the longitudinal beams (2) each being formed by a one-piece element that is continuous in the longitudinal direction from the front portion (1.1) to the rear portion (1.3) and the longitudinal beams (2) running at least predominantly parallel to one another in the front portion (1.1) and/or in the rear portion (1.3), and
- a plurality of transverse beams (3-7) which extend in the transverse direction and connect the longitudinal beams (2),
the chassis (1) having, in the middle portion (1.2) between the longitudinal beams (2), a mounting space (40) for the energy store (50) in which the energy store (50) is arranged in the assembled state,
**characterized in that,** in the middle portion (1.2), the longitudinal beams bulge outward in the transverse direction relative to the front portion (1.1) and the rear portion (1.3),
a buffer region (15) being formed between the mounting space (40) and the relevant longitudinal beam (2) in the transverse direction.

2. Chassis according to claim 1, **characterized in that** it has a holding device (10) for the energy store (50), which device defines the mounting space (40).

3. Chassis according to either of the preceding claims, **characterized in that** the longitudinal beams (2) are at least predominantly curved in the middle portion (1.2).

4. Chassis according to any of the preceding claims, **characterized in that** the longitudinal beams (2) have a cross-section (2.1) that is reinforced in the middle portion (1.2) relative to the front portion (1.1) and the rear portion (1.3).

5. Chassis according to any of the preceding claims, **characterized in that** a transverse beam (3, 4) is arranged in the transition regions (1.4, 1.5) from the front portion (1.1) to the middle portion (1.2) and from the middle portion (1.2) to the rear portion (1.3) in each case.

6. Chassis according to any of the preceding claims, **characterized in that** the holding device (10) is connected to the longitudinal beam (2) by at least one strut element (21) that extends in the transverse direction.

7. Chassis according to any of the preceding claims, **characterized in that** at least one crash element (20) is arranged in the buffer region (15).

8. Chassis according to any of the preceding claims, **characterized in that,** on both sides of the mounting space (50) in the transverse direction, the holding device (10) has two longitudinal frame elements (11.1, 16) that extend in the longitudinal direction and are at least indirectly connected to a longitudinal beam (2).

9. Chassis according to claim 8, **characterized in that** the longitudinal frame elements (11.1, 16) are interconnected by at least one frame strut (12) that extends in the transverse direction.

10. Chassis according to any of claims 2-9, **characterized in that** the holding device (10) has a frame (11) that peripherally surrounds the mounting space (40).

## Revendications

1. Châssis (1) pour un véhicule routier comprenant un accumulateur d'énergie électrique (50), ledit châssis comprenant :
- deux longerons (2) s'étendant dans le sens longitudinal, longerons qui, sur toute leur longueur, sont disposés à distance l'un de l'autre et présentent une partie avant (1.1), une partie centrale (1.2) et une partie arrière (1.3),
où les longerons (2) sont formés à chaque fois par un élément fabriqué de façon monobloc, ledit élément étant continu dans le sens longitudinal, depuis la partie avant (1.1) jusqu'à la partie arrière (1.3), et les longerons (2), dans la partie avant (1.1) et/ou dans la partie arrière (1.3), s'étendent au moins essentiellement de façon parallèle l'un à l'autre,
ainsi
- qu'une pluralité de traverses (3 - 7) s'étendant dans le sens transversal et reliant les longerons (2),
où le châssis (1) présente un espace de montage (40) pour l'accumulateur d'énergie (50) se trouvant entre les longerons (2) dans la partie centrale (1.2), espace de montage dans lequel l'accumulateur d'énergie (50) est disposé à l'état monté,
**caractérisé en ce que** les longerons, dans la partie centrale (1.2), sont convexes vers l'extérieur dans le sens transversal, par rapport à la partie avant (1.1) et à la partie arrière (1.3), et
où une zone tampon (15) est formée, dans le sens transversal, entre l'espace de montage (40) et le longeron respectif (2).

2. Châssis selon la revendication 1, **caractérisé en ce que** celui-ci présente un dispositif de retenue (10) pour l'accumulateur d'énergie (50), lequel dispositif de retenue définit l'espace de montage (40).

3. Châssis selon l'une des revendications précédentes, **caractérisé en ce que** les longerons (2) sont configurés, dans la partie centrale (1.2), de façon au moins essentiellement incurvée.

4. Châssis selon l'une quelconque des revendications précédentes, **caractérisé en ce que** les longerons (2) présentent, dans la partie centrale (1.2), une section transversale renforcée (2.1) par rapport à la partie avant (1.1) et à la partie arrière (1.3).

5. Châssis selon l'une quelconque des revendications précédentes, **caractérisé en ce qu'**une traverse (3, 4) est disposée à chaque fois dans des zones de transition (1.4, 1.5) pour passer de la partie avant (1.1) à la partie centrale (1.2), ainsi que pour passer de la partie centrale (1.2) à la partie arrière (1.3).

6. Châssis selon l'une quelconque des revendications précédentes, **caractérisé en ce que** le dispositif de retenue (10) est relié au longeron (2) par au moins un élément de contreventement (21) s'étendant dans le sens transversal.

7. Châssis selon l'une quelconque des revendications précédentes, **caractérisé en ce qu'**au moins un élément anticollision (20) est disposé dans la zone tampon (15).

8. Châssis selon l'une quelconque des revendications précédentes, **caractérisé en ce que** le dispositif de retenue (10) présente, des deux côtés de l'espace de montage (40) dans le sens transversal, deux éléments longitudinaux de cadre (11.1, 16) s'étendant dans le sens longitudinal et étant reliés au moins indirectement à un longeron (2).

9. Châssis selon la revendication 8, **caractérisé en ce que** les éléments longitudinaux de cadre (11.1, 16) sont reliés l'un à l'autre par au moins un contreventement de cadre (12) s'étendant dans le sens transversal.

10. Châssis selon l'une quelconque des revendications 2 à 9, **caractérisé en ce que** le dispositif de retenue (10) présente un cadre (11) entourant de façon circulaire l'espace de montage (40).
